# EUROPÄISCHE PATENTSCHRIFT

(11) **EP 1 511 944 B1**
(45) Veröffentlichungstag und Bekanntmachung des Hinweises auf die Patenterteilung: **19.07.2006**
(21) Anmeldenummer: 03726993.3
(22) Anmeldetag: 27.05.2003
(51) Int. Cl.: F16D 1/10, F16D 1/112, B25D 17/08, E21B 17/03

(54) **Verfahren und anordnung zum raschen Verbinden und Lösen von miteienander verbindbaren Elementen**
Method and assembly for the rapid connection and separation of interconnectable elements
Procédé et dispositif pour rélier rapidement et liberer rapidement des elements pouvant etre assemblés

(30) Priorität: 07.06.2002 AT 8712002
(43) Veröffentlichungstag der Anmeldung: 09.03.2005
(73) Patentinhaber: Techmo Entwicklungs- und Vertriebs GmbH, 8753 Fohnsdorf (AT); PAUL WURTH S.A., 1122 Luxembourg (LU)
(72) Erfinder: MOCIVNIK, Joseph, A-8753 Fohnsdorf (AT); LONARDI, Emile, L-4945 Bascharage (LU)
(74) Vertreter: Miksovsky, Alexander
(86) Internationale Anmeldenummer: PCT/AT2003/000152
(87) Internationale Veröffentlichungsnummer: WO 2003/104668

(56) Entgegenhaltungen:
- GB-A- 2 123 523
- US-A- 4 702 328
- US-A1- 2001 004 792

## Beschreibung

Die vorliegende Erfindung bezieht sich auf ein Verfahren zum raschen Verbinden und Lösen von miteinander verbindbaren Elementen, insbesondere Rohren bzw. Stangen, daran festlegbaren Antriebselementen oder Bearbeitungselementen, wie beispielsweise Bohrkronen, wobei ein Element mit einem profilierten Endstück in eine entsprechende Aufnahmeöffnung des damit zu verbindenden Elements und/oder eines Zwischen- bzw. Verbindungsstücks, insbesondere einer Muffe bzw. Hülse, eingeführt wird und kraftschlüssig mit dem zweiten Element verbunden wird. Die Erfindung bezieht sich weiters auf eine Anordnung zum raschen Verbinden und Lösen von miteinander verbindbaren Elementen, insbesondere Rohren bzw. Stangen, daran festlegbaren Antriebselementen oder Bearbeitungselementen, wie beispielsweise Bohrkronen, wobei ein Element mit einem profilierten Endstück in eine entsprechende Aufnahmeöffnung des damit zu verbindenden Elements und/oder eines Zwischen- bzw. Verbindungsstücks, insbesondere einer Muffe bzw. Hülse, einführbar ist und kraftschlüssig mit dem zweiten Element verbindbar ist, sowie auf eine Verwendung einer derartigen Anordnung.

Im Zusammenhang mit einem Verbinden und Lösen von miteinander verbindbaren Elementen, wie beispielsweise Rohren bzw. Stangen, besteht oftmals das Problem einer raschen Lösung und Verbindung von derartigen Elementen bzw. damit zu verbindenden Antriebselementen und/oder Bearbeitungselementen, wobei eine derartige rasche Verbindung oder Lösung auch unter gegebenenfalls rauhen bzw. widrigen Umgebungsbedingungen zuverlässig möglich bzw. durchführbar sein soll. Beispielsweise ist im Zusammenhang mit der Herstellung von Bohrlöchern eine oftmalige Verlängerung eines Bohrgestänges erforderlich, wobei bekannte Schraubverbindungen nicht nur einen zeitaufwendigen Verbindungs- und Lösevorgang erfordern, sondern derartige Schraubverbindungen insbesondere unter rauhen Einsatzbedingungen gegebenenfalls zu Problemen einer ordnungsgemäßen Verbindung bzw. eines ordnungsgemäßen Lösens einer derartigen Verbindung führen. Weiters muß beispielsweise bei der Herstellung eines Stichlochs an einem Hochofen durch eine Stichloch-Bohrmaschine sichergestellt werden, daß bei Austreten der eine hohe Temperatur aufweisenden Schmelzmasse wenigstens Teile des Bohrgestänges und insbesondere die Antriebseinrichtung ausreichend rasch von dem Bohrgestänge gelöst werden kann, um ein Entfernen zumindest der Bohrmaschine aus dem Bereich des austretenden Schmelzmasse hoher Temperatur zu ermöglichen.

Aus der US 2001/0004792 ist es bekannt, ein Bohrgestänge, das in einem profilierten Element befestigt ist, in die entsprechend profilierte Aufnahmeöffnung eines Antriebsteils einfach axial einzustecken. Bei axialer Verschiebung des profilierten Elements gegenüber dem Antriebsteil kann es daher leicht zum Lösen der Verbindung kommen.

Die Erfindung zielt nun darauf ab, ein Verfahren und eine Anordnung zum raschen Verbinden und Lösen von miteinander verbindbaren Elementen zur Verfügung zu stellen, womit auch unter gegebenenfalls rauhen bzw. widrigen Einsatz- bzw. Umgebungsbedingungen ein zuverlässiges und rasches Verbinden und Lösen von miteinander verbundenen Elementen, beispielsweise Rohren bzw. Stangen, und/oder daran festlegbaren Antriebselementen und/oder Bearbeitungselementen möglich wird.

Zur Lösung dieser Aufgaben ist das erfindungsgemäße Verfahren ausgehend von einem Verfahren der eingangs genannten Art im wesentlichen dadurch gekennzeichnet, daß zum Verbinden und Lösen der zwei miteinander zu verbindenden Elemente das profilierte Endstück nach einer Bewegung in axialer bzw. Verbindungsrichtung durch einen mit einer zum Endstück komplementären Profilierung versehenen Teilbereich der Aufnahmeöffnung relativ zu der Aufnahmeöffnung in einem einen erweiterten, lichten Querschnitt aufweisenden Teilbereich der Aufnahmeöffnung verdreht und anschließend wiederum in axialer Richtung in einen weiteren mit einer zum Endstück komplementären Profilierung versehenen Teilbereich der Aufnahmeöffnung bewegt wird. Dadurch, daß eine mehrstufige Relativbewegung zwischen den miteinander zu verbindenden Elementen und insbesondere zwischen dem profilierten bzw. eine Profilierung aufweisenden Endstück eines Elements und einer Aufnahmeöffnung eines zweiten Elements vorgenommen wird, läßt sich eine zuverlässige und sichere Verbindung zwischen den beiden Elementen aufrecht erhalten. Weiters wird sichergestellt, daß durch eine einfache, axiale Bewegung, gefolgt durch eine Rotationsbewegung und eine wiederum folgende, axiale Bewegung ein zufälliges bzw. irrtümliches Lösen der Verbindung mit Sicherheit verhindert werden kann, während durch die aufeinander abgestimmten Betätigungs- bzw. Bewegungsschritte zum Verbinden und Lösen der miteinander zu verbindenden Elemente eine rasche und sichere Verbindung und Lösung möglich wird. Im Gegensatz zu einer Schraubverbindung, welche nicht nur ein überaus aufwendiges Einpassen der miteinander zu verbindenden Gewindeelemente erfordert, sondern auch gegebenenfalls nach einem Einsatz bei einer Beanspruchung der Schraubverbindung Probleme beim Lösen derselben mit sich bringt und in jedem Fall durch die erforderliche mehrfache Drehbewegung der Elemente relativ zueinander einen entsprechend hohen Zeitaufwand erfordert, wird durch die erfindungsgemäß vorgeschlagene, abwechselnde, axiale Bewegung sowie Bewegung in Umfangs- bzw. Rotationsrichtung ein rasches Lösen und Verbinden sichergestellt. Ein derartiger Bewegungsablauf einer abwechselnden, axialen Bewegung und Rotationsbewegung sowohl zum Verbinden als auch zum Lösen läßt sich auch entsprechend einfach automatisiert vornehmen.

Um die Sicherheit gegenüber einem irrtümlichen Austreten bzw. Lösen der Verbindung bei einer ungewollten Bewegung in axialer Richtung der verbindungsstellen zu vermeiden, ist gemäß einer besonders bevorzugten Ausführungsform vorgesehen, daß zwischen den Bewegungsschritten in axialer Richtung eine Verdrehung um maximal 180° vorgenommen wird. Bevorzugt ist vorgesehen, daß eine Verdrehung um etwa 60° vorgenommen wird. Die versetzte Anordnung der Profilierungen im Bereich der Aufnahmeöffnung, wodurch eine Rotation zwischen den zwei axialen Bewegungen erforderlich wird, stellt sicher, daß ein Lösen der Verbindung lediglich durch axiales Verschieben der miteinander verbundenen Teile mit Sicherheit verhindert werden kann.

Zur Lösung der eingangs genannten Aufgabe ist darüber hinaus eine Anordnung der eingangs genannten Art im wesentlichen dadurch gekennzeichnet, daß ein Element an einem aufzunehmenden Endstück mit einer insbesondere polygonförmigen Profilierung versehen ist, welche in eine Aufnahmeöffnung eines damit zu verbindenden, zweiten Elements und/oder Verbindungs- bzw. Zwischenstücks einführbar ist, wobei die Aufnahmeöffnung in axialer Richtung bzw. Verbindungsrichtung ausgehend von dem Eintrittsende der Aufnahmeöffnung mit einem Teilbereich mit zur Profilierung des aufzunehmenden Endstücks komplementärer Profilierung, einem Bereich mit einem gegenüber dem Eintrittsende vergrößerten, lichten Querschnitt und daran anschließend wiederum einem Bereich mit an die Profilierung des aufzunehmenden Endstücks angepaßter Profilierung ausgebildet ist. Derartige Teilbereiche mit jeweils aufeinander abgestimmter Profilierung lassen sich entsprechend einfach und kostengünstig an den miteinander zu verbindenden Elementen ausbilden und stellen darüber hinaus eine überaus einfache Handhabung sowohl beim Verbinden als auch beim Lösen der miteinander verbundenen Elemente sicher, wie dies bereits oben ausgeführt wurde. Es genügt somit, an dem Endstück des aufzunehmenden Elements eine entsprechende Profilierung vorzusehen, während an dem aufnehmenden Ende des zweiten Elements voneinander getrennte Teilbereiche mit an die Profilierung des aufzunehmenden Endes angepaßter, komplementärer Profilierung vorgesehen sind, welche voneinander durch einen Teilbereich mit entsprechend größerem, lichtem Durchtrittsquerschnitt getrennt sind, um die Drehbewegung zwischen den miteinander zu verbindenden Elementen zu ermöglichen.

Um ein Lösen der verbindung durch eine lediglich axiale Verschiebung der zwei Elemente zu verhindern, wird gemäß einer bevorzugten Ausführungsform vorgeschlagen, daß die Teilbereiche mit an die Profilierung des aufzunehmenden Endstücks angepaßter, komplementärer Profilierung der Aufnahmeöffnung in Umfangsrichtung,gegeneinander versetzt ausgebildet sind.

Um die erfindungsgemäß vorgeschlagene Rotationsbewegung der zwei miteinander zu verbindenden Elemente nach der ersten Bewegung in axialer Richtung bzw. Verbindungsrichtung zuverlässig zu ermöglichen, wird gemäß einer weiters bevorzugten Ausführungsform vorgeschlagen, daß die Außenkonturen der Profilierung an dem aufzunehmenden Endstück einen gegenüber dem daran anschließenden Teilbereich des ersten Elements aufweisenden Querschnitt vergrößerten Querschnitt aufweisen. Das eine Außenprofilierung aufweisende, erste Element weist somit unmittelbar anschließend an den Verbindungsbereich bzw. das Endstück einen Bereich mit gegenüber den Außenkonturen der Profilierung verringertem Außenquerschnitt auf.

Um eine einfache und zuverlässige, relative Drehbewegung zwischen den einzelnen, miteinander zu verbindenden Elementen zwischen den zwei Bewegungsvorgängen in jeweils axialer Richtung bzw. Verbindungsrichtung zu ermöglichen, wird gemäß einer weiters bevorzugten Ausführungsform vorgeschlagen, daß der zwischenliegende Bereich der Aufnahmeöffnung mit vergrößertem, lichtem Querschnitt eine Länge in axialer Richtung bzw. Verbindungsrichtung aufweist, welche die axiale Erstreckung der Profilierung des aufzunehmenden Endstücks übersteigt. Für eine ordnungsgemäße Verankerung der zwei miteinander zu verbindenden Elemente muß das Endstück des ersten Elements mit einer Außenprofilierung einer entsprechenden Länge versehen sein, um auch eine nachträgliche Übertragung von gegebenenfalls hohen Kräften, beispielsweise bei einem Bohren bzw. Drehschlagbohren, zu ermöglichen. Durch eine entsprechende Wahl der Profilierung kann auch mit einer gegebenenfalls kurzen Länge der Außenprofilierung das Auslangen gefunden werden und es kann somit der für die Ermöglichung der Rotationsbewegung zur Verfügung zu stellende Abschnitt bzw. Bereich im Bereich des Aufnahmeendes entsprechend kurz ausgebildet werden.

Für eine einfach einzupassende Profilierung, welche darüber hinaus eine zuverlässige Kraftübertragung zwischen den einzelnen, miteinander zu verbindenden Elementen durch entsprechende große Auflageflächen ermöglicht, wird gemäß einer weiters bevorzugten Ausführungsform vorgeschlagen, daß die Profilierung am aufzunehmenden Endstück von einem regelmäßigen Polygon gebildet ist. Insbesondere im Zusammenhang mit einer einfachen Bearbeitung und Herstellung der miteinander zu verbindenden Anschlußbereiche wird gemäß einer weiters bevorzugten Ausführungsform vorgeschlagen, daß das Polygon einen dreieckigen Querschnitt mit abgerundeten Spitzen bzw. Scheiteln aufweist.

Für eine besonders einfache Ausbildung der unterschiedlich ausgebildeten Teilbereiche im Bereich der Aufnahmeöffnung des zweiten Elements bzw. Verbindungs- oder Zwischenstücks wird gemäß einer weiters bevorzugten Ausführungsform vorgeschlagen, daß die Profilierung am Eintrittsende der Aufnahmeöffnung an einem getrennten, mit dem aufnehmenden Element verbundenen, platten- bzw. scheibenförmigen Element ausgebildet ist. Bevorzugt ist vorgesehen, daß die Profilierung an einem mit dem aufnehmenden Element verschweißten Element ausgebildet ist. Es läßt sich somit in einfacher weise im Bereich der Aufnahmeöffnung der Bereich mit vergrößertem, lichtem Querschnitt zur Ermöglichung der Drehbewegung und daran anschließend der in axialer Richtung verlaufende Bereich mit entsprechend komplementärer Profilierung ausbilden, wonach das plattenförmige bzw. scheibenförmige Element mit ebenfalls komplementärer Profilierung relativ zu der Profilierung im Inneren der Aufnahmeöffnung versetzt am Anschlußende bzw. Eintrittsende der Aufnahmeöffnung festgelegt wird.

Während eine Verwendung einer erfindungsgemäßen Anordnung sowie eine Anwendung des erfindungsgemäßen Verfahrens für einen großen Anwendungsbereich bei der Verbindung von jeweils miteinander zu verbindenden, insbesondere rohr- bzw. stangenförmigen Elementen bzw. einer Verbindung derartiger rohr- bzw. stangenförmiger Elemente mit Antriebselementen und/oder Bearbeitungselementen möglich ist, wird gemäß einer besonders bevorzugten Ausführungsform eine Verwendung der erfindungsgemäßen Anordnung an einem insbesondere verlängerbaren Bohrgestänge, insbesondere einer Stichloch-Bohrmaschine, vorgeschlagen, da, wie oben bereits angedeutet, bei einem raschen Austritt der eine hohe Temperatur aufweisenden Schmelzmasse ein besonders rasches Trennen bzw. Lösen einzelner Gestängeabschnitte günstig bzw. erforderlich ist, um zumindest die Bohrmaschine vor den austretenden Schmelzmassen hoher Temperatur zu schützen.

Die Erfindung wird nachfolgend anhand von in der beiliegenden Zeichnung schematisch dargestellten Ausführungsbeispielen näher erläutert. In dieser zeigen:
Fig. 1 eine schematische Seitenansicht einer Stichloch-Bohrmaschine, bei welcher eine erfindungsgemäße Anordnung zur Durchführung des erfindungsgemäßen Verfahrens zum Einsatz gelangt;
Fig. 2 in vergrößerter Darstellung eine Ausführungsform einer erfindungsgemäßen Anordnung zur Durchführung des erfindungsgemäßen Verfahrens, wobei Fig. 2a den Zustand einer Verbindung zwischen den zwei miteinander zu verbindenden Elementen und Fig. 2b den Zustand eines teilweisen Lösens der miteinander zu verbindenden Elemente zeigt; und
Fig. 3 in vergrößertem Maßstab eine Ansicht in Richtung des Pfeils III auf die Eintrittsseite bzw. Stirnfläche einer Aufnahmeöffnung einer erfindungsgemäßen Anordnung.

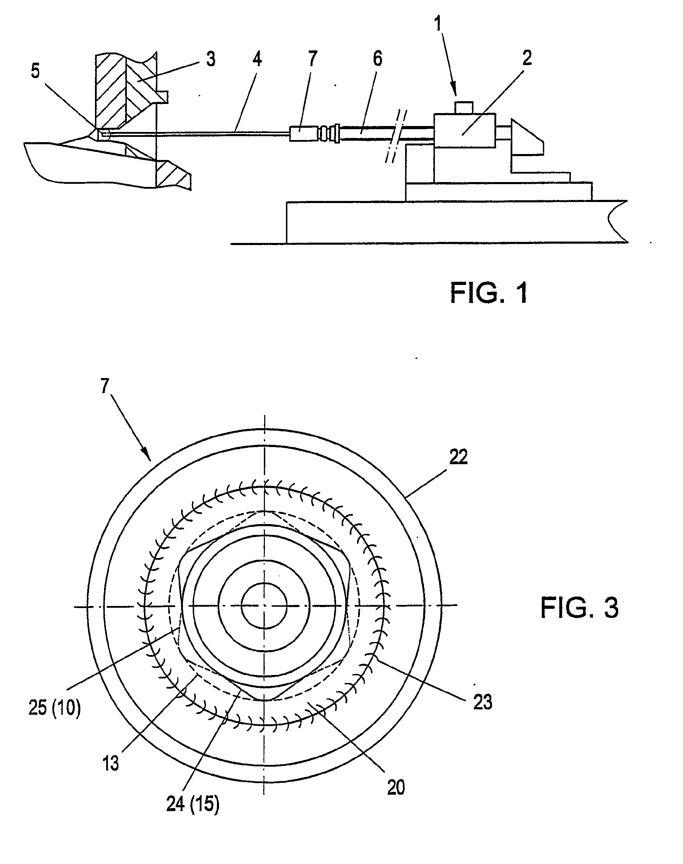

In Fig. 1 ist schematisch allgemein mit 1 eine Stichloch-Bohrmaschine bezeichnet, welche einen Antrieb 2 aufweist, um in einer schematisch mit 3 angedeuteten Wand eines Hochofens ein Stichloch bzw. Bohrloch auszubilden, wobei an einem Bohrgestänge 4 eine schematisch mit 5 bezeichnete Bohrkrone gelagert ist.

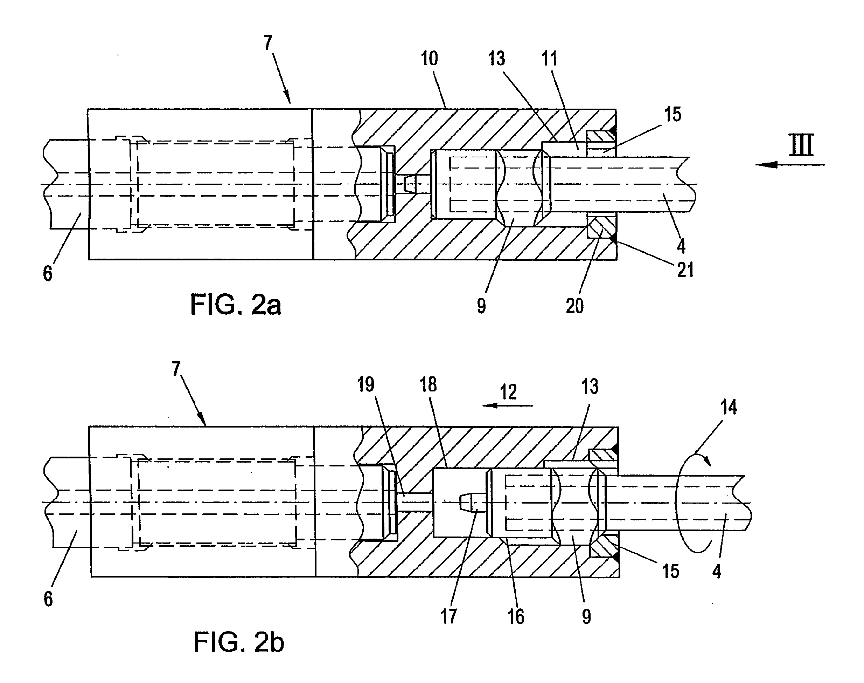

Zur Festlegung des Bohrgestänges 4 an einer Abtriebswelle 6 des Schlag- und/oder Drehantriebs der Stichloch-Bohrmaschine 1 wird das Bohrgestänge 4 über ein in Fig. 1 allgemein mit 7 bezeichnetes Zwischenelement einer Anordnung zur Verbindung der zwei stangen- bzw. rohrartigen Elemente 4 und 6 festgelegt, welche in Fig. 2 im Detail näher dargestellt ist.

Zum Verbinden des Bereichs der Abtriebswelle 6 der Stichloch-Bohrmaschine 1 mit dem Bohrgestänge 4 ist bei der in Fig. 2 dargestellten Ausführungsform ein Verbindungs- bzw. Zwischenelement 7 als Anordnung vorgesehen, wobei in dem in Fig. 2 gezeigten, linken Teilbereich die Abtriebswelle 6 fest in dem Zwischenelement 7 aufgenommen ist.

Zur Festlegung des Bohrgestänges 4 weist dieses an seinem vorderen, zum Zwischenelement 7 gewandten Endstück eine polygonförmige Außenkontur 9 auf. In dem in Fig. 2a gezeigten Verbindungszustand steht der mit einer polygonförmigen Außenprofilierung versehene Endbereich 9 des Bohrgestänges 4 in Eingriff mit einem in axialer Richtung verlaufenden, mit einer komplementären Profilierung versehenen Teilbereich 10 einer allgemein mit 11 bezeichneten Aufnahmeöffnung des Zwischenelements 7.

Für ein Lösen der Verbindung zwischen dem Bohrgestänge 4 mit dem Dreh- bzw. Drehschlagantrieb 6 über das Zwischenelement 7 wird, wie in Fig. 2b angedeutet, das Zwischenelement 7 entsprechend dem Pfeil 12 in axialer Richtung bzw. Verbindungsrichtung von dem Bohrgestänge 4 wegbewegt, so daß der mit einer Außenprofilierung versehene Teilbereich 9 in einen Bereich 13 der Aufnahmeöffnung 11 gelangt, welcher einen vergrößerten, lichten Querschnitt aufweist.

In der in Fig. 2b gezeigten, teilweisen Lösestellung wird eine relative Rotation zwischen der Abtriebswelle 6 bzw. dem Zwischenstück 7 sowie dem Bohrgestänge 4 im Sinn des Pfeils 14 beispielsweise um einen Winkel von etwa 60° vorgenommen, worauf anschließend wiederum in Sinn des Pfeils 12 eine axiale Verschiebung zwischen dem Bohrgestänge 4 und der Abtriebswelle 6 bzw. dem Zwischenstück 7 erfolgt, wobei der mit der polygonartigen Außenkontur versehene Bereich 9 des Bohrgestänges 4 durch einen weiteren Bereich 15 der Aufnahmeöffnung 11 hindurchtritt, welcher wiederum angepaßt an den polygonförmigen Außenquerschnitt des Teilbereichs 9 des Bohrgestänges 4 eine entsprechende polygonartige Profilierung aufweist, wie dies in Fig. 3 dargestellt ist. Für eine bessere Zentrierung des Bohrgestänges 4 im Bereich des Zwischenelements 7 ist anschließend an den mit der polygonartigen Profilierung versehenen Teilbereich 9 ein im wesentlichen zylindrischer Bereich 16 sowie ein Zentrierstift 17 insbesondere aus Fig. 2b deutlich ersichtlich, welche in einen entsprechenden zylindrischen Abschnitt 18 sowie in eine Zentrieröffnung 19 in verbundenem Zustand eintreten.

Wie aus Fig. 2 ersichtlich, ist der Teilbereich 15 mit wiederum polygonförmigem, komplementärem Profil an einem platten- bzw. scheibenförmigen Element 20 ausgebildet, welches im Bereich der Stirnseite 21 der Aufnahmeöffnung 11 mit dem Zwischenelement 7 verschweißt ist.

Aus Fig. 3 ist die relative Lage bzw. Positionierung der unterschiedlichen, polygonförmigen Profile im Bereich der Festlegung der zwei miteinander zu verbindenden Elemente deutlich ersichtlich. Mit 22 ist die Außenkontur des Zwischenelements 7 angedeutet, wobei der Bereich der Verschweißung an der Stirnseite des plattenförmigen Elements 20 mit 23 angedeutet ist. Das plattenförmige Element 20 weist eine polygonartige Profilierung 24 entsprechend dem Teilbereich 15 auf, wobei die Profilierung 24 der Außenkontur des Teilbereichs 9 des Bohrgestänges 4 entspricht. An den Teilbereich 20 mit der Profilierung 24 schließt der Teilbereich mit vergrößertem, lichtem Querschnitt an, dessen Kontur in Übereinstimmung mit Fig. 2 mit 13 bezeichnet ist, so daß bei einem Durchtreten des Teilbereichs 9 des Bohrgestänges 4 durch den Teilbereich 15 mit der polygonförmigen Kontur 24 eine freie Drehbarkeit des Bohrgestänges 4 und insbesondere des mit dem Polygon versehenen Teilbereichs 9 möglich wird. Nach einem Verdrehen um etwa 60° tritt der Teilbereich 9 mit polygonförmigem Außenprofil in den in axialer Richtung anschließenden Teilbereich mit wiederum polygonartiger Kontur ein, wobei die zweite Polygonkontur mit 25 entsprechend dem Bereich 10 des Zwischenelements bezeichnet ist.

Aus Fig. 3 ist ersichtlich, daß durch die versetzte Anordnung der zwei Polygone 24 und 25 selbst bei einer unbeabsichtigten, axialen Verschiebung zwischen den miteinander zu verbindenden Elementen 4 und 6 ein irrtümlicher Austritt aus dem Bereich der Verbindung nicht möglich ist.

Aus Fig. 3 ist weiters ersichtlich, daß die polygonartige Kontur beispielsweise von einem dreieckigen Polygon mit jeweils abgerundeten Spitzen bzw. Scheiteln gebildet ist. Anstelle der Festlegung der miteinander zu verbindenden Elemente 4 und 6 über ein Zwischenstück 7 kann selbstverständlich eines der Elemente mit einer entsprechenden Aufnahmeöffnung mit unterschiedlich geformten Teilbereichen entsprechend dem Zwischenstück bzw. Verbindungsstück 7 zur Herstellung der Anordnung für ein rasches und leichtes Lösen und Verbinden der zwei miteinander zu verbindenden Elemente 4 und 6 ausgebildet sein.

Anstelle der Festlegung eines Bohrgestänges 4 an einer Antriebswelle 6, wie dies in den vorangehenden Figuren gezeigt ist, kann durch die dargestellte Anordnung für ein rasches Verbinden und Lösen auch ein Verbinden von einzelnen rohr- bzw. stangenartigen Elementen, beispielsweise bei einer Verlängerung eines Bohrgestänges 4, ermöglicht werden, oder es kann entsprechend der schnell und einfach zu lösenden bzw. zu verbindenden Anordnung bzw. Verbindung auch eine Festlegung beispielsweise eines Bohrgestänges 4 an einer Bohrkrone 5 vorgenommen werden.

Neben einer Ausbildung mit im wesentlichen dreieckiger, polygonartiger Struktur mit abgerundeten Scheiteln bzw. Spitzen kann selbstverständlich eine andere, im wesentlichen symmetrische bzw. gleichmäßige Polygonstruktur gewählt werden, wobei der Rotationswinkel zwischen den miteinander zu verbindendenden Elementen auf den gegenseitigen Winkelabstand von einzelnen Scheiteln bzw. Spitzen der Polygonverbindung abgestimmt wird.

## Patentansprüche

1. Verfahren zum raschen Verbinden und Lösen von miteinander verbindbaren Elementen (4, 6), insbesondere Rohren bzw. Stangen, daran festlegbaren Antriebselementen (2) oder Bearbeitungselementen, wie beispielsweise Bohrkronen (5), wobei ein Element (4) mit einem profilierten Endstück (9) in eine entsprechende Aufnahmeöffnung (11) des damit zu verbindenden Elements (6) und/oder eines Zwischen- bzw. Verbindungsstücks (7), insbesondere einer Muffe bzw. Hülse, eingeführt wird und kraftschlüssig mit dem zweiten Element (6) verbunden wird, **dadurch gekennzeichnet, daß** zum Verbinden und Lösen der zwei miteinander zu verbindenden Elemente (4, 6) das profilierte Endstück (9) nach einer Bewegung in axialer bzw. Verbindungsrichtung (12) durch einen mit einer zum Endstück komplementären Profilierung versehenen Teilbereich (15) der Aufnahmeöffnung (11) relativ zu der Aufnahmeöffnung (11) in einem einen erweiterten, lichten Querschnitt aufweisenden Teilbereich (13) der Aufnahmeöffnung (11) verdreht und anschließend wiederum in axialer Richtung in einen weiteren mit einer zum Endstück (9) komplementären Profilierung versehenen Teilbereich (10) der Aufnahmeöffnung (11) bewegt wird.

2. Verfahren nach Anspruch 1, **dadurch gekennzeichnet, daß** zwischen den Bewegungsschritten in axialer Richtung (12) eine Verdrehung um maximal 180° vorgenommen wird.

3. Verfahren nach Anspruch 2, **dadurch gekennzeichnet, daß** eine Verdrehung um etwa 60° vorgenommen wird.

4. Anordnung zum raschen Verbinden und Lösen von miteinander verbindbaren Elementen (4,6), insbesondere Rohren bzw. Stangen, daran festlegbaren Antriebselementen (2) oder Bearbeitungselementen, wie beispielsweise Bohrkronen (5), wobei ein Element (4) mit einem profilierten Endstück (9) in eine entsprechende Aufnahmeöffnung (11) des damit zu verbindenden Elements (6) und/oder eines Zwischen- bzw. Verbindungsstücks (7), insbesondere einer Muffe bzw. Hülse, einführbar ist und kraftschlüssig mit dem zweiten Element (6) verbindbar ist, **dadurch gekennzeichnet, daß** ein Element (4) an einem aufzunehmenden Endstück (9) mit einer insbesondere polygonförmigen Profilierung versehen ist, welche in eine Aufnahmeöffnung (11) eines damit zu verbindenden, zweiten Elements (6) und/oder Verbindungs- bzw. Zwischenstücks (7) einführbar ist, wobei die Aufnahmeöffnung (11) in axialer Richtung bzw. Verbindungsrichtung (12) ausgehend von dem Eintrittsende (21) der Aufnahmeöffnung (11) mit einem Teilbereich (15) mit zur Profilierung des aufzunehmenden Endstücks (9) komplementärer Profilierung (24), einem Bereich (13) mit einem gegenüber dem Eintrittsende vergrößerten, lichten Querschnitt und daran anschließend wiederum einem Bereich (10) mit an die Profilierung des aufzunehmenden Endstücks (9) angepaßter Profilierung (25) ausgebildet ist.

5. Anordnung nach Anspruch 4, **dadurch gekennzeichnet, daß** die Teilbereiche (10, 15) mit an die Profilierung des aufzunehmenden Endstücks angepaßter, komplementärer Profilierung (24, 25) der Aufnahmeöffnung (11) in Umfangsrichtung gegeneinander versetzt ausgebildet sind.

6. Anordnung nach Anspruch 4 oder 5, **dadurch gekennzeichnet, daß** die Außenkonturen der Profilierung an dem aufzunehmenden Endstück (9) einen gegenüber dem daran anschließenden Teilbereich des ersten Elements (4) aufweisenden Querschnitt vergrößerten Querschnitt aufweisen.

7. Anordnung nach Anspruch 4, 5 oder 6, **dadurch gekennzeichnet, daß** der zwischenliegende Bereich (13) der Aufnahmeöffnung (11) mit vergrößertem, lichtem Querschnitt eine Länge in axialer Richtung bzw. Verbindungsrichtung (12) aufweist, welche die axiale Erstreckung der Profilierung des aufzunehmenden Endstücks (9) übersteigt.

8. Anordnung nach einem der Ansprüche 4 bis 7, **dadurch gekennzeichnet, daß** die Profilierung am aufzunehmenden Endstück (9) von einem regelmäßigen Polygon (24, 25) gebildet ist.

9. Anordnung nach Anspruch 8, **dadurch gekennzeichnet, daß** das Polygon (24, 25) einen dreieckigen Querschnitt mit abgerundeten Spitzen bzw. Scheiteln aufweist.

10. Anordnung nach einem der Ansprüche 4 bis 9, **dadurch gekennzeichnet, daß** die Profilierung (24) am Eintrittsende (21) der Aufnahmeöffnung (11) an einem getrennten, mit dem aufnehmenden Element verbundenen, platten- bzw. scheibenförmigen Element (20) ausgebildet ist.

11. Anordnung nach Anspruch 10, **dadurch gekennzeichnet, daß** die Profilierung an einem mit dem aufnehmenden Element verschweißten Element (20) ausgebildet ist.

12. Verwendung einer Anordnung zum raschen Verbinden und Lösen von miteinander verbindbaren Elementen nach einem der Ansprüche 4 bis 11 an einem insbesondere verlängerbaren Bohrgestänge (4).

13. Verwendung nach Anspruch 12 an einem verlängerbaren Bohrgestänge (4) einer Stichlochbohrmaschine (1).

## Claims

1. A method for the rapid connection and detachment of connectable elements (4, 6), particularly tubes or rods, driving elements (2) or working elements capable of being fixed thereto such as, for instance, drill bits (5), wherein an element (4) having a profiled end piece (9) is introduced into a respective reception opening (11) of the element (6) to be connected therewith and/or an intermediate or connection piece (7), particularly a bushing or sleeve, and connected with the second element (6) in a positive and force-transmitting manner, **characterized in that**, for the connection and detachment of the two elements (4, 6) to be connected, the profiled end piece (9) after a movement in the axial or connection direction (12) is rotated, by a partial region (15) of the reception opening (11) provided with a profile complementary to that of the end piece, relative to the reception opening (11) in a partial region (13) of the reception opening (11) having an enlarged clear cross section and subsequently is again moved in the axial direction into a further partial region (10) of the reception opening (11) provided with a profile complementary to that of the end piece (9).

2. A method according to claim 1, **characterized in that** a rotation by a maximum of 180° is effected between the steps of movement in the axial direction (12).

3. A method according to claim 2, **characterized in that** a rotation of approximately 60° is effected.

4. An arrangement for the rapid connection and detachment of connectable elements (4, 6), particularly tubes or rods, driving elements (2) or working elements capable of being fixed thereto such as, for instance, drill bits (5), wherein an element (4) having a profiled end piece (9) is introducible into a respective reception opening (11) of the element (6) to be connected therewith and/or an intermediate or connection piece (7), particularly a bushing or sleeve, and connectable with the second element (6) in a positive and force-transmitting manner, **characterized in that** an element (4) on an end piece (9) to be received is provided with a particularly polygonal profile capable of being inserted in a reception opening (11) of a second element (6) to be connected therewith and/or a connection or intermediate piece (7), wherein, departing from the entry end (21) of the reception opening (11), the reception opening (7) in the axial or connection direction (12) is formed with a partial region (15) having a profile (24) complementary to the profile of the end piece (9) to be received, a region (13) having a clear cross section enlarged relative to the entry end and, following thereupon, another region (10) having a profile (25) adapted to the profile of the end piece (9) to be received.

5. An arrangement according to claim 4, **characterized in that** the partial regions (10, 15) having complementary reception opening profiles (24, 25) adapted to the profile of the end piece to be received are designed to be mutually offset in the peripheral direction.

6. An arrangement according to claim 4 or 5, **characterized in that** the outer contours of the profile provided on the end piece (9) to be received have a cross section enlarged relative to the cross section of the partial region of the first element (4) following thereupon.

7. An arrangement according to claim 4, 5 or 6, **characterized in that** the intermediately located region (13) of the reception opening (11) having an enlarged clear cross section has a length in the axial direction or connection direction (12), which exceeds the axial extension of the profile of the end piece (9) to be received.

8. An arrangement according to any one of claims 4 to 7, **characterized in that** the profile on the end piece (9) to be received is formed by a regular polygon (24, 25).

9. An arrangement according to claim 8, **characterized in that** the polygon (24, 25) the polygon has a triangular cross section having rounded tips or vertices.

10. An arrangement according to any one of claims 4 to 9, **characterized in that** the profile (24) on the entry end (21) of the reception opening (11) is formed on a separate plate-shaped or disc-shaped element (20) connected with the receiving element.

11. An arrangement according to claim 10, **characterized in that** the profile is formed on an element (20) welded with the receiving element.

12. The use of an arrangement for the rapid connection and detachment of connectable elements according to any one of claims 4 to 11 with a particularly extendable drill rod assembly (4).

13. The use according to claim 12 with an extendable drill rod assembly (4) of a tap-hole drilling machine (1).

## Revendications

1. Procédé de jonction et de séparation rapides d'éléments (4, 6) pouvant être reliés entre eux, en particulier tubes ou tiges, d'éléments d'entraînement (2) ou d'éléments de travail, tels que par exemple des couronnes de forage (5), pouvant être fixés sur ces derniers, un élément (4) muni d'un embout profilé (9) étant introduit dans une ouverture de réception correspondante (11) de l'élément (6) à relier et/ou d'une pièce intermédiaire ou de jonction (7), en particulier un manchon ou une douille, et étant relié par force d'adhérence avec le second élément (6), **caractérisé en ce que**, pour la jonction et la séparation des deux éléments à relier entre eux (4, 6), l'embout profilé (9), après un déplacement dans la direction axiale ou de jonction (12), est tourné par rapport à l'ouverture de réception (11) au travers d'une zone partielle (15) de l'ouverture de réception munie d'un profilage complémentaire à l'embout dans une zone partielle (13) présentant une section transversale élargie, libre, de l'ouverture de réception (11), puis est de nouveau déplacé dans la direction axiale dans une autre zone partielle (10) munie d'un profilage complémentaire à l'embout (9) de l'ouverture de réception (11).

2. Procédé suivant la revendication 1, **caractérisé en ce qu'**une rotation d'au maximum 180° est effectuée entre les étapes de déplacement dans la direction axiale (12).

3. Procédé suivant la revendication 2, **caractérisé en ce qu'**une rotation d'environ 60° est effectuée.

4. Dispositif de jonction et de séparation rapides d'éléments (4, 6) pouvant être reliés entre eux, en particulier tubes ou tiges, d'éléments d'entraînement (2) ou d'éléments de travail, tels que par exemple des couronnes de forages (5), pouvant être fixés sur ces derniers, un élément (4) muni d'un embout profilé (9) pouvant être introduit dans une ouverture de réception correspondante (11) de l'élément (6) à relier et/ou d'une pièce intermédiaire ou de jonction (7), en particulier un manchon ou une douille, et pouvant être relié par force d'adhérence avec le second élément (6), **caractérisé en ce qu'**un élément (4) est muni sur un embout (9) à recevoir d'un profilage en particulier polygonal, qui peut être introduit dans une ouverture de réception (11) d'un second élément (6) à relier et/ou d'une pièce de jonction ou intermédiaire (7), l'ouverture de réception (11) étant configurée dans la direction axiale ou de jonction (12) à partir de son extrémité d'entrée (21) avec une zone partielle (15) munie d'un profilage (24) complémentaire au profilage de l'embout (9) à recevoir, avec une zone (13) de section transversale élargie par rapport à l'extrémité d'entrée, libre, et de nouveau avec une zone (10) consécutive munie d'un profilage (25) adapté au profilage de l'embout (9) à recevoir.

5. Dispositif suivant la revendication 4, **caractérisé en ce que** les zones partielles (10, 15) sont configurées avec un profilage complémentaire (24, 25) de l'ouverture de réception (11), adapté au profilage de l'embout à recevoir, en déport mutuel dans la direction périphérique.

6. Dispositif suivant l'une des revendications 4 et 5, **caractérisé en ce que** les contours extérieurs du profilage sur l'embout (9) à recevoir présentent une section transversale agrandie par rapport à la section transversale comportant la zone partielle s'y raccordant du premier élément (4).

7. Dispositif suivant l'une des revendications 4, 5 et 6, **caractérisé en ce que** la zone intermédiaire (13) de l'ouverture de réception (11) de section transversale agrandie, libre, présente dans la direction axiale ou dans la direction de jonction (12) une longueur qui dépasse l'extension axiale du profilage de l'embout (9) à recevoir.

8. Dispositif suivant l'une des revendications 4 à 7, **caractérisé en ce que** le profilage sur l'embout (9) à recevoir est formé par un polygone régulier (24, 25).

9. Dispositif suivant la revendication 8, **caractérisé en ce que** le polygone (24, 25) présente une section transversale triangulaire avec des pointes ou sommets arrondis.

10. Dispositif suivant l'une des revendications 4 à 9, **caractérisé en ce que** le profilage (24) sur l'extrémité d'entrée (21) de l'ouverture de réception (11) est réalisé sur un élément (20) séparé en forme de plaque ou de disque, relié à l'élément de réception.

11. Dispositif suivant la revendication 10, **caractérisé en ce que** le profilage est réalisé sur un élément (20) soudé avec l'élément de réception.

12. Utilisation d'un dispositif de jonction et de séparation rapides d'éléments pouvant être reliés entre eux suivant l'une des revendications 4 à 11 sur une tige de fleuret (4) en particulier à rallonge.

13. Utilisation suivant la revendication 12 sur une tige de forage à rallonge (4) d'une machine à forer des trous de coulée (1).
